# EUROPEAN PATENT APPLICATION

(11) **EP 4 808 080 A1**
(43) Date of publication of application: **16.09.2026**
(21) Application number: 25162763.4
(22) Date of filing: 10.03.2025
(51) Int. Cl.: H04L 65/1016, H04L 65/1069, H04L 65/611, H04L 65/80

(54) **METHOD, APPARATUS & COMPUTER PROGRAM**

(71) Applicant: Nokia Technologies Oy, 02610 Espoo (FI)
(72) Inventor: GÜL, Serhan, Berlin (DE); AHSAN, Saba, Espoo (FI); ISOMÄKI, Markus Sakari, Espoo (FI); SARKER ANM, Zaheduzzaman, Espoo (FI); SHANMUGALINGAM, Sivasothy, Rennes (FR)
(74) Representative: Nokia EPO representatives

(57) **Abstract**

There is provided, an apparatus for a first entity, the apparatus comprising: means for receiving, from a second entity, a first message comprising information indicating a scope of one or more header extensions that are supported by the second entity; means for sending, to the second entity, a subscription request to subscribe to one or more tracks and requesting one or more header extensions for the one or more tracks, the requested one or more header extensions being based at least in part on the first message; means for receiving, from the second entity, a subscription response indicating one or more header extensions that will be provided for the one or more tracks; and means for sending, to a third entity, an indication of the one or more header extensions that will be provided for the one or more tracks.

## Description

### TECHNICAL FIELD

Various examples of this disclosure relate to a method, apparatus, system and computer program, and - in particular, but not exclusively - to, providing header extensions in one or more objects (e.g., one or more Media over QUIC (MOQ) objects).

### BACKGROUND

A communication network can be seen as a facility that enables communications between two or more communication devices or provides communication devices access to a data network. A mobile or wireless communication network is one example of a communication network. A communication device may be provided with a service by an application server.

Such communication networks operate in accordance with standards, such as those provided by 3GPP (Third Generation Partnership Project) or ETSI (European Telecommunications Standards Institute). Examples of standards provided by 3GPP are the so-called 3GPP standards for cellular technology generations, such as 3GPP standards for 4G technology and 3GPP standards for 5G technology.

### SUMMARY

Some examples of this disclosure will be described with respect to certain aspects. These aspects are not intended to indicate key or essential features of the various examples of this disclosure, nor are they intended to be used to limit the scope of thereof. Other features, aspects, and elements will be apparent to a person skilled in the art in view of this disclosure. For example, it should be appreciated that further aspects may be provided by the combination of any two or more of the various aspects described below.

According to a first aspect, there is provided a method for a first entity, the method comprising: receiving, from a second entity, a first message comprising information indicating a scope of one or more header extensions that are supported by the second entity; sending, to the second entity, a subscription request to subscribe to one or more tracks and requesting one or more header extensions for the one or more tracks, the requested one or more header extensions being based at least in part on the first message; receiving, from the second entity, a subscription response indicating one or more header extensions that will be provided for the one or more tracks; and sending, to a third entity, an indication of the one or more header extensions that will be provided for the one or more tracks.

The one or more header extensions may comprise Media Related Information.

The first entity may comprise a user plane function with an integrated media over QUIC relay, the second entity may comprise a publisher, and the third entity may comprise a session management function.

The method may further comprise: receiving, from a fourth entity, a subscription request for the one or more tracks, wherein the subscription request sent to the second entity may be based on the subscription request received from the fourth entity.

The fourth entity may comprise a user equipment.

The subscription request received from the fourth entity may comprise information indicating one or more header extensions requested by the fourth entity.

The method may further comprise: sending, to the fourth entity, information indicating one or more header extensions preferred by the first entity, wherein the one or more header extensions requested by the fourth entity may be based on the one or more header extensions preferred by the first entity.

The method may further comprise: receiving, from the third entity, information indicating at least one of: one or more required header extensions for the one or more tracks, traffic information associated with the one or more tracks; or one or more quality of service rules associated with the one or more tracks, wherein the one or more header extensions preferred by the first entity may be based on the indicated at least one of: the one or more required header extensions, the traffic information associated with the one or more tracks; or the one or more quality of service rules associated with the one or more tracks.

Each track may be identified by at least one of: a track namespace, a track name, a subscription identifier, a sender identifier, a receiver identifier, or a track alias.

The method may further comprise: determining that the one or more required header extensions are unavailable for the one or more tracks; and sending, to the third entity, a message indicating that the one or more required header extensions are not available.

The method may further comprise: receiving, from the second entity, one or more objects for the one or more tracks based on the subscription request, the one or more objects comprising at least one of the one or more header extensions; and sending, to the fourth entity, the one or more objects for the one or more tracks, the one or more objects comprising the at least one of the one or more header extensions.

The one or more tracks may comprise one or more media over QUIC tracks.

The first message may comprise a CLIENT_SETUP message or a SERVER_SETUP message.

The scope of the one or more header extensions that are supported may be at least one of: session, wherein the one or more header extensions are supported for all tracks in the session; track, wherein the one or more header extensions are supported for zero or more tracks; or track namespace, wherein the one or more header extensions are supported for all tracks associated with the track namespace.

The method may further comprise: receiving, from a second subscriber, a third subscription request to subscribe to at least one first track and requesting at least one first header extension for the at least one first track; receiving, from a third subscriber, a fourth subscription request to subscribe to at least one first track and requesting at least one second header extension for the at least one first track; and sending, to the second entity, a fifth subscription request to subscribe to at least the at least one first track and requesting the art least one first header extension and the at least one second header extension.

The method may further comprise: receiving, from the second entity, one or more objects comprising at least one third header extension and at least one fourth header extension; sending, to a fourth subscriber, the one or more objects comprising the at least one third header extension; and sending, to a fifth subscriber, the one or more objects comprising the at least one fourth header extension.

The method may further comprise: receiving, from the second entity, one or more objects for the one or more tracks, the one or more objects comprising the one or more header extensions; removing at least one of the one or more header extensions from the one or more objects; and sending, to a subscriber, the one or more objects without the removed at least one of the one or more header extensions.

According to a second aspect, there is provided an apparatus for a first entity, the apparatus comprising at least one processor and at least one memory storing instructions that, when executed by the at least one processor, cause the first entity to perform at least any method of the first aspect.

According to a third aspect, there is provided an apparatus for a first entity, the apparatus comprising: means for receiving, from a second entity, a first message comprising information indicating a scope of one or more header extensions that are supported by the second entity; means for sending, to the second entity, a subscription request to subscribe to one or more tracks and requesting one or more header extensions for the one or more tracks, the requested one or more header extensions being based at least in part on the first message; means for receiving, from the second entity, a subscription response indicating one or more header extensions that will be provided for the one or more tracks; and means for sending, to a third entity, an indication of the one or more header extensions that will be provided for the one or more tracks.

The one or more header extensions may comprise Media Related Information.

The first entity may comprise a user plane function with an integrated media over QUIC relay, the second entity may comprise a publisher, and the third entity may comprise a session management function.

The apparatus may further comprise: means for receiving, from a fourth entity, a subscription request for the one or more tracks, wherein the subscription request sent to the second entity may be based on the subscription request received from the fourth entity.

The fourth entity may comprise a user equipment.

The subscription request received from the fourth entity may comprise information indicating one or more header extensions requested by the fourth entity.

The apparatus may further comprise: means for sending, to the fourth entity, information indicating one or more header extensions preferred by the first entity, wherein the one or more header extensions requested by the fourth entity may be based on the one or more header extensions preferred by the first entity.

The apparatus may further comprise: means for receiving, from the third entity, information indicating at least one of: one or more required header extensions for the one or more tracks, traffic information associated with the one or more tracks; or one or more quality of service rules associated with the one or more tracks, wherein the one or more header extensions preferred by the first entity may be based on the indicated at least one of: the one or more required header extensions, the traffic information associated with the one or more tracks; or the one or more quality of service rules associated with the one or more tracks.

Each track may be identified by at least one of: a track namespace, a track name, a subscription identifier, a sender identifier, a receiver identifier, or a track alias.

The apparatus may further comprise: means for determining that the one or more required header extensions are unavailable for the one or more tracks; and means for sending, to the third entity, a message indicating that the one or more required header extensions are not available.

The apparatus may further comprise: means for receiving, from the second entity, one or more objects for the one or more tracks based on the subscription request, the one or more objects comprising at least one of the one or more header extensions; and means for sending, to the fourth entity, the one or more objects for the one or more tracks, the one or more objects comprising the at least one of the one or more header extensions.

The one or more tracks may comprise one or more media over QUIC tracks.

The first message may comprise a CLIENT_SETUP message or a SERVER_SETUP message.

The scope of the one or more header extensions that are supported may be at least one of: session, wherein the one or more header extensions are supported for all tracks in the session; track, wherein the one or more header extensions are supported for zero or more tracks; or track namespace, wherein the one or more header extensions are supported for all tracks associated with the track namespace.

The apparatus may further comprise: means for receiving, from a second subscriber, a third subscription request to subscribe to at least one first track and requesting at least one first header extension for the at least one first track; means for receiving, from a third subscriber, a fourth subscription request to subscribe to at least one first track and requesting at least one second header extension for the at least one first track; and means for sending, to the second entity, a fifth subscription request to subscribe to at least the at least one first track and requesting the art least one first header extension and the at least one second header extension.

The apparatus may further comprise: means for receiving, from the second entity, one or more objects comprising at least one third header extension and at least one fourth header extension; means for sending, to a fourth subscriber, the one or more objects comprising the at least one third header extension; and means for sending, to a fifth subscriber, the one or more objects comprising the at least one fourth header extension.

The apparatus may further comprise: means for receiving, from the second entity, one or more objects for the one or more tracks, the one or more objects comprising the one or more header extensions; means for removing at least one of the one or more header extensions from the one or more objects; and means for sending, to a subscriber, the one or more objects without the removed at least one of the one or more header extensions.

According to a fourth aspect, there is provided a computer readable medium comprising instructions which, when executed by a first entity, cause the first entity to perform at least any method of the first aspect.

According to a fifth aspect, there is provided a non-transitory computer readable medium comprising program instructions that, when executed by a first entity, cause the first entity to perform at least any method according to the first aspect.

According to a sixth aspect, there is provided a computer program comprising instructions, which, when executed by an apparatus cause the apparatus at least to perform any method of the first aspect.

In the above, many different aspects have been described. As previously noted, it should be appreciated that further aspects may be provided by the combination of any two or more of the aspects described above. Other features, aspects, and elements will become apparent in view of the following.

### DESCRIPTION OF FIGURES

Some examples will now be described, by way of non-limiting and illustrative example only, with reference to the accompanying Figures (FIGs.) in which:
FIG. 1 shows an example of a communication network to which examples disclosed herein may be applied;
FIG. 2 shows a representation of a 5^{th} generation communication system;
FIGs. 3 and 4 show methods according to some examples;
FIG. 5 shows a signalling procedure according to some examples;
FIGs. 6 to 11 show methods according to some examples; and
FIG. 12 shows an apparatus according to some examples.

### DETAILED DESCRIPTION

Some examples of this disclosure may be implemented in a communication network, such as any of the following radio access technologies (RATs): World-wide Interoperability for Micro-wave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and enhanced LTE (eLTE), 5G (also called NR), or any future RAT such as 6G. Moreover, communication within the communication network may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), and/or Discrete Fourier Transform spread OFDM (DFT-s-OFDM).

As used herein, the term "network device" or "network node" may refer to a node in a communication network via which user equipment may access the network and/or which is capable of controlling radio communication and managing radio resources within a cell. The network node or network device may be referred to as a base station (BS), an access point (AP) or an access node. The network device may be, depending on the applied technology, for example, a node B (NodeB or NB), an evolved NodeB (eNodeB or eNB), an NR NB (also referred to as a gNB), a Remote Radio Unit (RRU), a radio head (RH), a remote radio head (RRH), a relay, an Integrated Access and Backhaul (IAB) node, a low power node, a non-terrestrial network (NTN) or non-ground network device such as a satellite network device, a low earth orbit (LEO) satellite and a geosynchronous earth orbit (GEO) satellite, or an aircraft network device.

Moreover, in connection of split radio access network (RAN), the network device may refer to a centralised unit (CU) of a base station and/or a distributed unit (DU) of a base station. An interface between CU and DU may be referred to as an F1 interface in NR. In the split RAN architecture, node operations may be carried out, at least partly, in the central/centralized unit, CU, (e.g., server, host or node) operationally coupled to the DU, (e.g., a radio head/node). One CU may control one or more DUs, acting at least as transmit/receive (Tx/Rx) nodes. In some examples, the DUs may comprise, e.g., a radio link control (RLC), medium access control (MAC) layer and a physical (PHY) layer, whereas the CU may comprise the layers above RLC layer, such as a packet data convergence protocol (PDCP) layer, a radio resource control (RRC) and an internet protocol (IP) layers. Other functional splits are possible too. In practice, any processing task may be performed in either the CU or the DU and the boundary where the responsibility is shifted between the CU and the DU may depend on the applied implementation.

The term "terminal device" may refer to any end device that may be capable of wireless communication. By way of example, a terminal device may be referred to as a communication device, user equipment (UE), a Subscriber Station (SS), or a Mobile Station (MS). The terminal device may include a mobile phone, a cellular phone, a smart phone, voice over IP (VoIP) phones, wireless local loop phones a tablet, a wearable terminal device, a personal digital assistant (PDA), portable computers, desktop computer, image capture terminal devices such as digital cameras, gaming terminal devices, music storage and play-back appliances, vehicle-mounted wireless terminal devices, USB dongles, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like.

A term "resource", as used herein, may refer to radio resources in time domain, in frequency domain, in space domain, and/or in code domain. Some examples of resources include, e.g., a physical resource block (PRB), a radio frame, a subframe, a time slot, a subband, a frequency region, a sub-carrier, a beam, etc. The term "transmission" and/or "reception" may refer to wirelessly transmitting and/or receiving via a wireless propagation channel on radio resources.

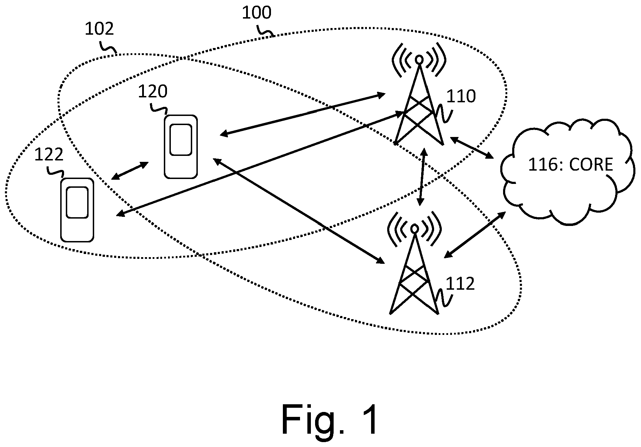

FIG. 1 illustrates an example of a communication network to which examples disclosed herein may be applied. The communication network or a cellular communication network may comprise a network node 110 configured to provide one or more cells, such as cell 100, and a network node 112 configured to provide one or more other cells, such as cell 102. Each cell may be, e.g., a macro cell, a micro cell, femto, or a pico cell, for example. The cell may define a coverage area or a service area of the corresponding access node.

The network node 110 may be configured to provide a user equipment (UE) 120 (one or more UEs) with wireless access to the communication network. The wireless access may comprise downlink (DL) communication from the network node to the UE 120 and uplink (UL) communication from the UE 120 to the network node. Examples of uplink channels comprise physical uplink control channel (PUCCH) for transmitting control information and physical uplink shared channel (PUSCH) for transmitting data towards the network. Examples of downlink channels comprise physical downlink control channel (PDCCH) for transmitting control information and physical downlink shared channel (PDSCH) for transmitting data towards the user equipment.

There may be a plurality of UEs 120, 122 in the system. Each of the plurality of UEs 120, 122 may be served by the same or by different network nodes 110, 112. A UE may be configured with dual connectivity (DC), wherein the UE, e.g., UE 120, may be connected to multiple network nodes 110, 112. The UEs 120, 122 may communicate with each other, in case device-to-device (D2D) communication interface is established between them via a so-called sidelink (SL). Such D2D communications may be referred to as machine-to-machine, peer-to-peer (P2P) communications, or vehicle-to-vehicle (V2V), for example.

In the case of multiple network nodes in the communication network, the network nodes may be connected to each other via an interface. LTE specifications refer to such an interface as an X2 interface. An interface between an LTE node and a 5G node, or between two 5G nodes may be referred to an Xn interface. The network nodes 110 and 112 may be further connected via another interface to a core network 116 of the communication network.

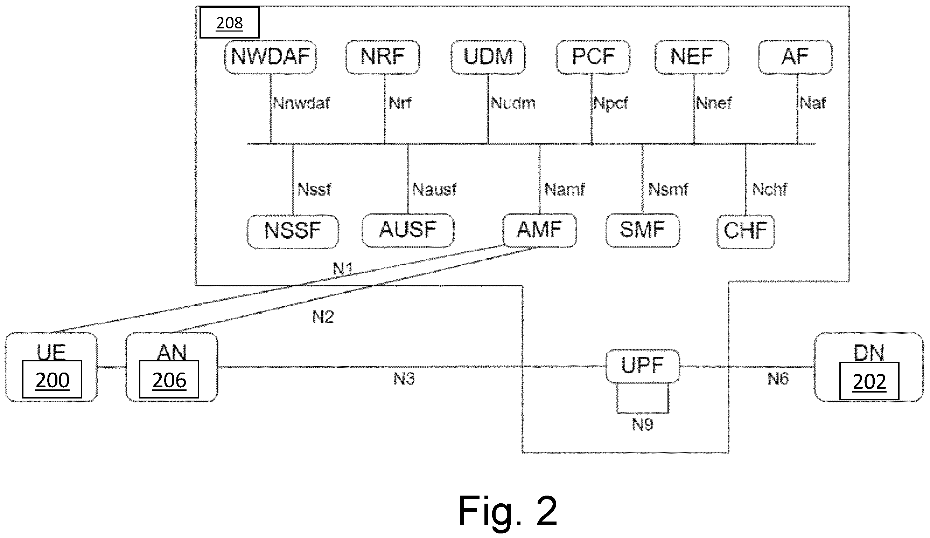

In the following, various examples are explained with reference to communication devices capable of communication with a communication system. Before explaining in detail the various examples of this disclosure, a 5^{th} generation communication system (5GS), an access network and a core network (5GC) thereof, and communication devices are briefly explained with reference to FIG. 2.

FIG. 2 shows a schematic representation of a communication system. Referring to FIG. 2, user equipment (UE) 200 that communicates with application servers (not shown) hosting third party application functions (not shown) of a data network 202 via a communication network is shown. The communication network includes a radio access network 206 (e.g., a Next Generation Radio Access Network (NG-RAN)) and a core network 208 (e.g., a 5G core network (5GC)) that operate based on the 5th generation radio access technology described, for example, in the 3rd Generation Partnership Project (3GPP) standard for new radio. The core network 208 includes network functions (generally referred to a network function and collective referred to as network functions) may be connected to a management system configured to manage the communication network as described in further detail below.

Radio access network 206 comprises one or more radio access network (RAN) nodes (otherwise referred to as base stations). A RAN node may be configured to provide one or more cells. A cell may be, for example, a macro cell, a micro cell, femto, or a pico cell. A cell defines a coverage area or a service area of a RAN node. A RAN node may be, for example, implemented as a node B (NodeB or NB), an evolved NodeB (eNodeB or eNB), a next generation node B (gNB), a Remote Radio Unit (RRU), a remote radio head (RRH), a relay, an Integrated Access and Backhaul (IAB) node, a low power node. RAN nodes may be deployed in non-terrestrial network (NTN) devices, such as satellites (e.g., low earth orbit (LEO) satellites or geosynchronous earth orbit (GEO) satellites), aircrafts, or drones, where such NTN devices form a non-terrestrial network such as a ground station. RAN nodes may also be deployed on the group in which case the RAN nodes may be referred to as terrestrial network device. A RAN comprising terrestrial network devices is generally referred to as a terrestrial network.

A RAN node may have a split architecture where functions of the RAN node (e.g., an eNB or a gNB) are split between various entities. A RAN node that has a split architecture may comprise a radio unit (RU) (otherwise referred to as a remoter radio read (RRH), a centralized unit (CU) and one or more distributed units (DUs). A DU may be connected to a RU via a fronthaul. A DU may be connected to a CU via a midhaul or F1 interface. A CU may be connected to a core network (e.g., core network 108) via a backhaul. In a RAN node with a split architecture, operations of the RAN node may be carried out, by the CU, the DU. One CU may control one or more DUs.

A RU converts radio signals sent to and from an antenna into a digital signal for transmission over packet network, handles the digital front end (DFE) and the lower PHY layer, and includes digital beamforming functionality. A DU is a logical entity (e.g., software) that is hosted and run on a server located near an RU. A CU is a logical entity (e.g., software) that is hosted and run on a server. The CU may be hosted and run on its own server or may be hosted and run on the same server that hosts and runs the DU. located near an RU. The DU includes a subset of the functions of a RAN node (e.g., eNB or gNB) depending on the split of functions and the CU includes the other functions of a RAN node that are not in the subset of functions of the DU. A DU may comprise a subset of the layers of a protocol stack of a RAN node and a CU may comprise the other layers of the protocol stack that are not in the subset of layers in the DU. For example, in some implementations, a DU may include a radio link control (RLC) layer, a medium access control (MAC) layer and a physical (PHY) layer of a protocol stack for a RAN node, whereas a CU may comprise the layers of the protocol stack of a RAN node above the RLC layer, such as a packet data convergence protocol (PDCP) layer, a radio resource control (RRC) layer and an internet protocol (IP) layer. The operations of a DU are controlled by a CU.

The core network 208 may have a service-based architecture. The network functions of the core network 208 include an access and mobility function (AMF), an authentication server function (AUSF), a network exposure function (NEF), a network repository function (NRF), a network slicing selection function (NSSF), a policy control function (PCF), a session management function (SMF), a user plane function (UPF), a united data repository (UDM), and a network data analytics function (NWDAF). Other network functions of the core network 208, such as a binding support function (BSF), a charging function (CHF), are not shown in FIG. 2 for ease of illustration.

The AMF handles access, authorization, authentication of user equipment, including the UE 200 and manages the mobility of user equipment 200 as the user equipment 200 moves between different radio access networks, cells, or locations.

The SMF is responsible for establishing, maintaining, and terminating protocol data unit sessions in the core network 208. The SMF manages user plane resources and interacts with the UPF of the core network 208 to ensure data packets are correctly routed and forwarded.

The UDM performs authentication procedures, stores and manages user data, including such as subscriber profiles, authentication credentials, and authorization policies, implements security mechanisms to protect user data and resources of the communication network (e.g., the core network 208) from unauthorized access attacks and vulnerabilities, and interacts with other network functions of the core network 208, such as the PCF, to enforce access control policies, Quality of Service (QoS) parameters, and service restrictions based on user profiles and subscription plans. The UDM is also responsible for managing the registration of network functions that serve the user equipment 200.

The network analytics data function (NWDAF) is configured to collect or retrieve data about one or more NFs of the core network, generate analytics based on the data about the one or more NFs collected or retrieved by the NWDAF, and to provide the analytics that are generated to itself or to other NFs that have requested analytics generated by the NWDAF. The NWDAF may include an Analytics logical function (AnLF) that is configured to generate analytics (e.g., generate statistics and/or generate predictions) based on the data about the one or more NFs collected and/or retrieved by the NWDAF. The NWDAF further includes an analytics service that is exposed by the NWDAF to provide the analytics generated by the AnLF. The NWDAF further includes a Model Training logical function (NWDAF(MTLF)) that is configured to train Al/ML models that can be used by AnLF to generate analytics based on the data about the one or more network functions collected or retrieved from the one or more network functions and/or the OAM entity.

The functionalities of other network functions of the core network 208 are are not described in detail for sake of brevity.

Media over QUIC (MOQ) has been developed for media delivery. QUIC is an end-to-end encrypted transport layer protocol that supports multiple streams that are reliable and provide in-order delivery to a receiver. QUIC has several advantages over its predecessor, Transmission Control Protocol (TCP), including faster connection setup, better loss handling and support for unreliable delivery of delay-sensitive and loss-tolerant traffic. MOQ has the potential to harmonize media delivery protocols that currently comprise of primarily an HTTP-based delivery framework for live and on-demand video (e.g., DASH, HLS) and an RTP-based delivery framework for video conferencing and other real-time applications (e.g., WebRTC, MTSI).

MOQ, or MOQ Transport (MOQT), allows, enables and/or facilitates a producer of media to publish data and have it consumed via subscription by a multiplicity of endpoints. As used herein, MOQ and MOQT may be used interchangeably. MOQT supports content distribution networks and is particularly suited to high scale and low latency distribution. MOQT is based on publish and subscribe (PubSub) messaging services.

MOQT has a hierarchical object model for data, comprising of objects, subgroups, groups and tracks.

Objects are the basic data element of MOQT. An object is an addressable unit whose payload is a sequence of bytes. All objects belong to a group, indicating ordering and potential dependencies. An object is uniquely identified by its track namespace, track name, group ID, and object ID, and must be an identical sequence of bytes regardless of how or where it is retrieved. An object can become unavailable, but its contents do not change over time.

Objects are comprised of two parts: metadata and a payload. The metadata is not encrypted and is visible to relays. The payload portion may be encrypted, in which case it is only visible to the original publisher and end subscribers. An application or application server generating the media is solely responsible for the content of the object payload, and also the underlying encoding, compression, any end-to-end encryption, or authentication. A relay will not combine, split, or otherwise modify object payloads.

The object metadata may comprise information indicating at least one of the following:
(a) track namespace and track name of the track the object belongs to;
(b) A group identifier of the group that the object belongs to and/or a subgroup identifier of the subgroup that the object belongs to;
(c) An identifier of the object within a group or subgroup - the identifier may help preserve the order of objects within a group/subgroup, and may start at 0 and increase sequentially for each object in the group/subgroup;
(d) A priority value set by the publisher of the object indicating the publisher's priority for the object;
(e) An object forwarding preference indicating how a publisher sends the object (e.g., may be set to track, subgroup, or datagram);
(f) An object status, for example indicating whether objects are missing or to mark the end of a group or track;
(g) An object extension count indicating a number of object extension headers (which may be interchangeably referred to as header extensions herein) included in the object; and
(h) One or more object extension headers.

A sequence of one or more objects from the same group may be grouped into a subgroup in ascending order by object ID. Objects in a subgroup have a dependency and priority relationship consistent with sharing a QUIC stream. In some cases, a group may be most effectively delivered using more than one QUIC stream.

Every object within a group may belong to exactly one subgroup. Objects from two subgroups cannot be sent on the same QUIC stream. Objects from the same subgroup are not sent on different QUIC streams, unless one of the streams was reset prematurely, or upstream conditions have forced objects from a subgroup to be sent out of object ID order.

A group is a temporal sequence of objects and is a sub-unit of a track. Objects within a group do not depend on objects in other groups. A group may behave as a join point for subscriptions - for example, a new subscriber might not want to receive the entire track, and may instead opt to receive only the latest group(s). The publisher then selectively transmits objects based on their group membership.

A track is a sequence of groups. It is the entity against which a subscriber issues a subscription request. A subscriber can request to receive individual tracks starting at a group boundary, including any new objects pushed by the publisher while the track is active.

In MOQT, every track has a track name and a track namespace associated with it. As used herein, "namespace" and "track namespace" may be used interchangeably. A track name identifies an individual track within the namespace. Track namespace may be an ordered N-tuple of bytes where N can be between 1 and 32. The structured nature of track namespace allows relays and applications to manipulate prefixes of a namespace. Track name is a sequence of bytes.

MOQT defines various control messages which are exchanged over a single bidirectional stream between a client (the party initiating a MOQT session) and a MOQT server (the party accepting an incoming transport session).

To establish a MOQ session, the client and server may exchange CLIENT_SETUP messages and SERVER_SETUP messages to allow, enable, and/or facilitate the client and server to establish a mutually supported version and agree on an initial configuration before any objects are exchanged. The messages may comprise a sequence of key-value pairs called Setup parameters; the semantics and format of which can vary based on whether the client or server is sending.

Once the MOQ session has been established between the client and server, a subscriber (an endpoint - e.g., the client - that subscribes to and receives tracks) may issue a SUBSCRIBE message to a publisher (an endpoint - e.g., the server - that handles subscriptions by sending requested Objects from the requested track) to request a track. A subscriber may issue a SUBSCRIBE_UPDATE message to a publisher to request a change to a prior subscription.

The subscriber may be an end subscriber (a subscriber that initiates a subscription and does not send the data on to other subscribers), or an intermediary or relay between the end subscriber and the original publisher (the initial publisher of a given track). In the case of being a relay, the relay may act as a subscriber with respect to the original publisher (i.e. the relay may subscribe to the original publisher) and may act as a publisher with respect to the end subscriber (i.e. the relay may publish to the end subscriber).

A publisher may send an ANNOUNCE control message to advertise where a receiver of the ANNOUNCE control message can route SUBSCRIBE messages for tracks within the announced track namespace. The receiver may verify that the publisher is authorized to publish tracks under this namespace.

A publisher may also send information to a receiver to indicate the tracks being produced by the publisher. The information may be comprised in a catalog. The catalog itself may be a MOQT track to which an entity can subscribe. The catalog may provide the track name and track namespaces of the tracks being produced by the publisher, optionally with additional information such as the relationship between tracks, properties of the tracks, and any relevant initialization information. The content of the catalog may be opaque to relays and may be end-to-end encrypted - that is to say, only an end subscriber may be able to read the contents of the catalog. Different formats for the catalog are possible, depending on the particular application. For instance, for media streaming applications, a streaming format known as WARP may be used.

A catalog object (that is, an object in the catalog MOQT track) may be independent of other catalog objects, or may be dependent on other catalog objects (e.g., it may represent an update to a previous catalog object, for instance indicating that a particular track is no longer available).

While MOQT has many advantages for media streaming use cases, there remain issues associated with its use.

For instance, as described previously, in some cases an object may comprise one or more header extensions. The one or more header extensions may comprise additional metadata related to the object or track, and may be visible to relays to help allow, enable, and/or facilitate object distribution. Each header extension may comprise a header type field identifying the type of the header extension; one or more values of the header extension; and optionally a length of the header extension.

Header extensions may be defined in a common specification or standard to allow, enable, and/or facilitate interoperability between publishers, subscribers and relays. The common specification may define a type and value of a header extension along with any rules for processing, modifying, caching and forwarding the header extension. An entity (e.g., original publisher, end subscriber, relay) may be considered to support a header extension if the entity is coded to implement the rules for that header extension as defined in the common specification.

If an entity, e.g., a relay does not support a header extension, the entity may not modify the extension header, and may instead cache the header extension as part of the object and forward the extension header on to a subscriber. If an entity supports a header extension, the entity may modify, add, remove and/or cache the header extension.

An entity (e.g., a client) may negotiate with another entity (e.g., a server) to provide different header extensions as part of a MOQ session. For instance, a client may send a CLIENT_SETUP message to the server indicating one or more header extensions supported by the client, and the server may send a SERVER_SETUP message in response indicating one or more header extensions supported by the server. The client can then choose whether or not to continue the MOQ session based on the supported header extensions.

The negotiation of header extensions may take place on the session level, i.e. the negotiated header extensions apply to all tracks subscribed to as part of the MOQ session. However, each header extensions (such as metadata about tracks) is not necessarily a uniform session-level property. There are several kinds of metadata that may be utilized and/or needed in one track and not in another. One example is the rendered pose (see 3GPP TS 26.522) in a split rendering scenario, where the server signals in an RTP header extension indicating the pose used to render the video frame carried in the RTP packet. Another example is the audio level header extension (see RFC 6464), which indicates the audio level of an audio sample carried in the RTP packet.

Support for header extensions, such as 3GPP Media Related Information (MRI), also depends on the (original) publisher's ability to provide said header extensions. Some publishers may be able to (e.g., configured to) support certain header extensions while others may not. MoQ relays may be able to (e.g., configured to) serve tracks from multiple kinds of publishers and in that case, it may be limiting (e.g., overly limiting) to negotiate one common support for track or object related header extensions on the level of the MOQ session.

For these reasons, it would be beneficial to negotiate a header extension for a specific subscription or track rather than the whole MOQ session.

Furthermore, in some network deployments, the MOQ subscriber may be located in the UE and the MOQ relay may be integrated in the UPF. It may be advantageous to know which pieces of MRI, which can be included in objects as header extensions, are supported for each track so that the UPF is ready to act upon them and the RAN can be configured to use features relying on them, such as PDU Set specific QoS or End of Data Burst or Time to Next Burst based scheduling or power saving.

It may be beneficial for the supported header extensions to be known when a subscriber (e.g., UE) subscribes to a track via the UPF integrated MOQ relay and the QoS for the delivery of that track in the network from UPF to UE is configured. However, there are challenges in how and when the information about which header extensions (e.g., which pieces of MRI) are available may be known to the UPF integrated relay - for instance, information about which header extensions (e.g., which pieces of MRI) are available could be provided by an AF to NEF and that way to the entire network, but while this is possible it also utilizes and/or requires a mechanism for the AF to learn such track specific information, and relying on AF to provide this may not be practical for deployment purposes.

Examples of this disclosure may address one or more of these issues. Some examples may provide mechanisms for a publisher and subscriber to negotiate a scope (e.g., session level, track namespace level, or track level) of supported header extensions during an initial setup procedure. In some examples, as part of the subscription request, a subscriber may indicate, for header extensions having a track-level scope of supported header extensions, which header extension(s) the subscriber wants to obtain. In some examples, the publisher may indicate, in the catalog of tracks, which header extensions are available for a given track, and the subscriber may subscribe to that track to receive the objects associated with the track and the available header extensions.

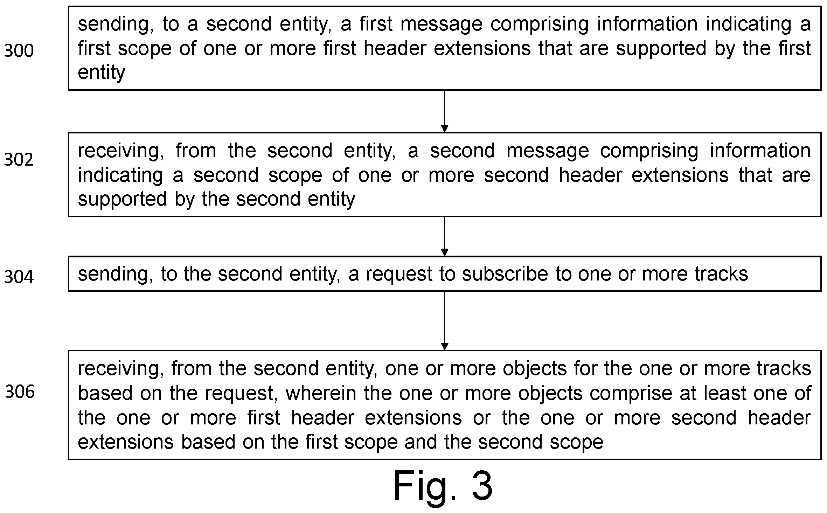

Reference is made to FIG. 3, which shows a method according to some examples. The method shown in FIG. 3 may be performed by a first entity acting as a subscriber, such as an end subscriber or a relay acting as a subscriber. In some examples, the first entity may comprise, be implemented as, or be comprised in a UE.

At 300, the method comprises sending, to a second entity, a first message comprising information indicating a first scope of one or more first header extensions that are supported by the first entity.

At 302, the method comprises receiving, from the second entity, a second message comprising information indicating a second scope of one or more second header extensions that are supported by the second entity.

In some examples, steps 300 and 302 may be reversed - that is to say, in some examples, the first message may be sent by the first entity after the first entity has received the second message. The first message may comprise a SERVER_SETUP message and the second message may comprise a CLIENT_SETUP message as described previously.

At 304, the method comprises sending, to the second entity, a request to subscribe to one or more tracks. A track may refer to a logical grouping of media data within a media file or stream. Multiple tracks can be present in a media file/stream. A track may have a single type of media, e.g., video, audio, subtitle, metadata, or multiple types of media. The one or more tracks may comprise one or more MOQ tracks. In some examples, the request to subscribe to the one or more tracks may comprise information indicating one or more requested header extensions for the one or more tracks.

At 306, the method comprises receiving, from the second entity, one or more objects for the one or more tracks based on the request, wherein the one or more objects comprise at least one of the one or more first header extensions or the one or more second header extensions based on the first scope and the second scope.

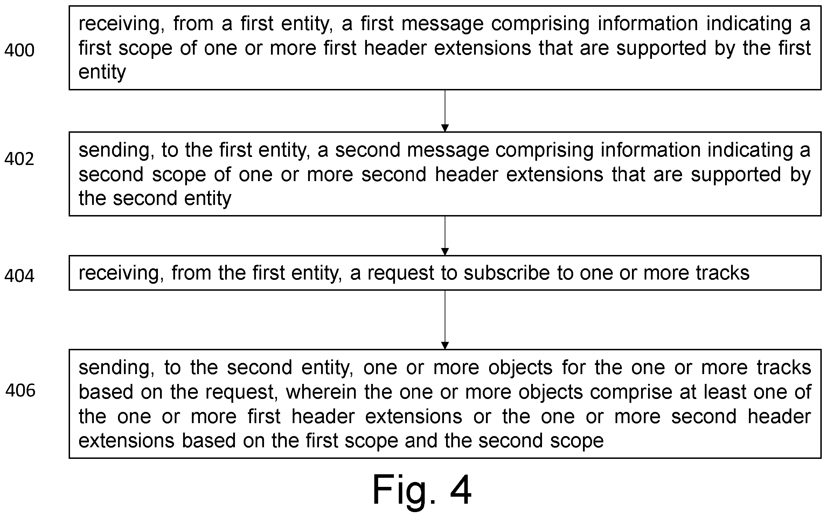

Reference is made to FIG. 4, which shows a method according to some examples. The method shown in FIG. 4 may be performed by a second entity acting as a publisher, such as an original publisher (e.g., an application server) or a relay acting as a publisher. In some examples, the second entity may comprise, be implemented as, or be comprised in a server (e.g., an application server).

At 400, the method comprises receiving, from a first entity, a first message comprising information indicating a first scope of one or more first header extensions that are supported by the first entity.

At 402, the method comprises sending, to the first entity, a second message comprising information indicating a second scope of one or more second header extensions that are supported by the second entity.

In some examples, steps 400 and 402 may be reversed - that is to say, in some examples, the first message may be received by the second entity after the second entity has sent the second message. The first message may comprise a SERVER_SETUP message and the second message may comprise a CLIENT_SETUP message as described previously.

At 404, the method comprises receiving, from the first entity, a request to subscribe to one or more tracks. A track may refer to a logical grouping of media data within a media file or stream. Multiple tracks can be present in a media file/stream. A track may have a single type of media, e.g., video, audio, subtitle, metadata, or multiple types of media. The one or more tracks may comprise one or more MOQ tracks. In some examples, the request to subscribe to the one or more tracks may comprise information indicating one or more requested header extensions for the one or more tracks.

At 406, the method comprises sending, to the second entity, one or more objects for the one or more tracks based on the request, wherein the one or more objects comprise at least one of the one or more first header extensions or the one or more second header extensions based on the first scope and the second scope.

In some examples, the scope for which the one or more header extensions are supported is at least one of: session, track, or track namespace.

When the scope is session, the one or more header extensions are supported for all tracks in the session. Thus for example, the first scope being session for header extension X1 indicates that the first entity supports X1 for all tracks in the session.

When the scope is track, the one or more header extensions are supported for zero or more tracks that will be published in the session. For instance, the second scope being track for header extension X2 indicates that the second entity may support X2 for zero or more tracks. The first entity may send a subscription request for a track and request header extension X2 on a per-track basis. In some examples, the scope may indicate that header extension negotiation is enabled on a per-track basis as part of the SUBSCRIBE message.

When the scope is track namespace, the one or more header extensions are supported for all tracks associated with the track namespace. For instance, the first scope being track namespace for header extension X3 indicates that the first entity supports X3 for all tracks associated with a particular track namespace.

When the scope of a given header extension indicated in the first message and/or second message is track or track namespace, this may not necessarily mean that the given header extension will be provided, but rather indicates that the header extension is supported on a per track or per track namespace basis. The first entity may then subscribe to the track(s) and include in the subscription request an indication of which header extension(s) are requested.

The one or more objects comprising at least one of the one or more header extensions may be based on the first scope and the second scope. Thus, for example, if the first scope is session for header extensions [X1, X2] and the second scope is session for header extension [X1] and track for header extension [X2, X3], then header extension X1 may be received for all tracks in the session, header extension X2 may be requested on a per-track basis (e.g., as part of the subscription request), and header extension X3 would not be provided as X3 is not part of the first scope (i.e. is not supported by the first entity).

In some examples, an ANNOUNCE message sent by the second entity to the first entity can further include the scope parameter set to track namespace to indicate that all tracks within this namespace will have a particular header extension enabled. If the first entity responds with an ANNOUNCE_OK message including the scope parameter set to track namespace, the header extension is included for all tracks that are published in that namespace. If the first entity responds with an ANNOUNCE_OK message including the scope parameter set to track, the header extension may be added when the SUBSCRIBE message includes a request for that particular header extension. If the first entity does not want to receive a particular header extension from a track namespace that is indicated in an ANNOUNCE message, the first entity can respond with an ANNOUNCE_ERROR message indicating "Extension Unavailable". The error "Extension Unavailable" may be appended with the ID(s) of the header extension(s) that the first entity does not want to receive. In some examples, an ANNOUNCE message may not be allowed to set the scope to session.

There may be a logical relationship or hierarchy between the different values of the scope, for instance session > track namespace > track. In some examples, when responding to a SETUP message, the scope of a header extension may be narrowed but not widened. For example, if a SETUP message includes scope="namespace", the response may include scope="namespace" or "track" (narrowed scope), but not "session" (widened scope).

Thus, in some examples, when the first scope is session, the second scope is one of session, track, or track namespace; when the first scope is track namespace, and the second scope is track, or track namespace; and when the first scope is track, and the second scope is track.

In some examples, the scope of a header extension may not be changed in a response. Thus, for example, if the first scope indicated in the first message is not acceptable, the response message may indicate an error - for instance if the first scope=session for header extension X1 (to request that X1 be included in all tracks of a session) but this is not acceptable to the second entity, the second entity may reject the request and issue an error message.

In some examples, a message (e.g., CLIENT_SETUP message or ANNOUNCE message) may comprise multiple values of the scope for a particular extension in order of preference (e.g., scope=[session, namespace]). The other endpoint may then provide in the response (e.g., SERVER_ SETUP or ANNOUNCE_OK) a selected one (e.g., scope=session). Thus, for example, the first message may comprise a plurality of scope values in ordered preference, and the second message may comprise one of the plurality of scope values.

As mentioned previously, in some examples, the request to subscribe to the one or more tracks may comprise information indicating one or more requested header extensions for the one or more tracks. The one or more requested header extensions may be based on the first scope and the second scope. That is to say, the first entity may request header extensions on a per track or per track namespace basis that are within the first scope and the second scope. For example, if the first scope = track for header extensions X1 and X2, and the second scope = track for header extension X1, then the first entity may request header extension X1 on a per track basis in the subscription request, but not header extension X2 (as it is not within the first scope).

In some examples, a relay that forwards all header extensions it receives may use an indicator (e.g., *) to indicate for all header extensions, and set the scope to "namespace" or "track" to indicate that the relay supports everything that is negotiated in subsequent procedures e.g., SUBSCRIBE, ANNOUNCE, and/or catalog. Similarly, a relay that does not support any extension (e.g., a relay may remove all extension for security reasons) can indicate that the scope is null.

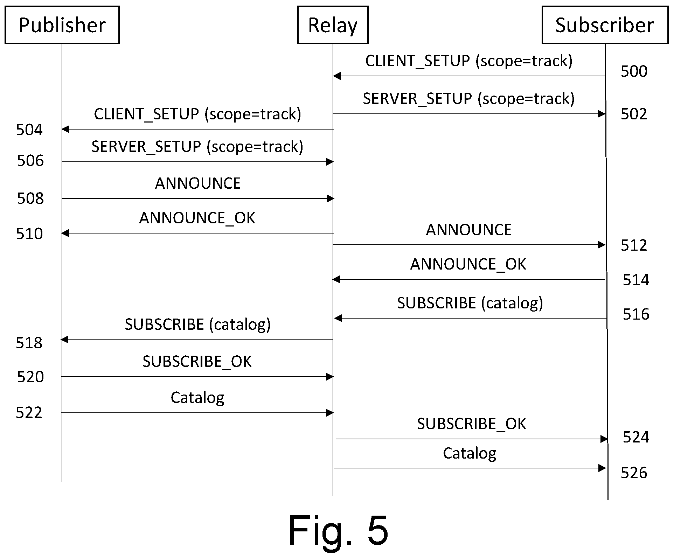

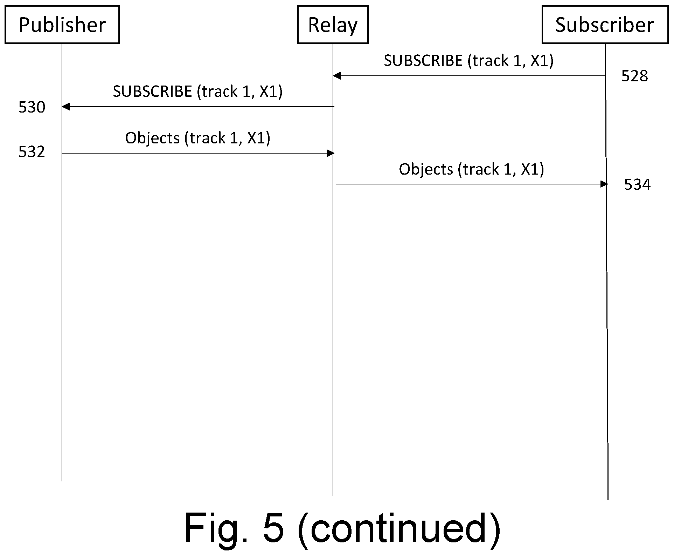

Reference is made to FIG. 5, which shows a signalling procedure according to some examples. In the specific example of FIG. 5, the client and server (which depending on the hop may be end subscriber and relay or relay and original publisher) negotiate header extensions X1, X2 in the SETUP messages with scope=track, and the end subscriber subscribes to track 1 requesting header extension X1. While only one relay is shown between the original publisher and end subscriber in FIG. 5, it should be appreciated that in other examples a different number of relays (including zero) may be provided between the original publisher and end subscriber.

At 500, the end subscriber (e.g., a UE) sends, to the relay, a CLIENT_SETUP message with scope=track. The CLIENT_SETUP message is an example of the first message described previously.

At 502, the relay sends, to the end subscriber, a SERVER_SETUP message with scope=track. The SERVER_SETUP message is an example of the second message described previously.

At 504, the relay sends, to the original publisher, a CLIENT_SETUP message with scope=track. The CLIENT_SETUP message is an example of the first message described previously.

In some examples, the SETUP messages may be exchanged per-hop. Therefore, when the relay receives a CLIENT_SETUP message, it may send the SERVER_SETUP message back to the subscriber at 502 and the CLIENT_SETUP message to the original publisher at 504. In some examples, the CLIENT_SETUP and SERVER_SETUP messages may be sent sequentially (as shown in FIG. 5) or in parallel. The SETUP messages exchanged between publisher-Relay and Relay-Subscriber are different, i.e., they are not simply forwarded by relays.

At 506, the original publisher sends, to the relay, a SERVER_SETUP message with scope=track. The SERVER_SETUP message is an example of the second message described previously.

At 508, the original publisher sends an ANNOUNCE message to the relay to announce the track namespace of the tracks available for publishing.

At 510, the relay sends an ANNOUNCE_OK message to the original publisher in response to the ANNOUNCE message.

At 512, the relay sends, to the end subscriber, an ANNOUNCE message to announce the track namespace of the tracks available for publishing.

At 514, the end subscriber sends an ANNOUNCE_OK message to the relay in response to the ANNOUNCE message.

At 516, the end subscriber sends a SUBSCRIBE request to the relay to subscribe to the catalog.

If the relay does not already have an active subscription for the catalog track, then at 518 the relay sends a SUBSCRIBE request to the original publisher to subscribe to the catalog and at 520 the relay receives a corresponding SUBSCRIBE_OK message from the original publisher.

At 522, the original publisher publishes the catalog track to the relay, and at 524 the relay sends a SUBSCRIBE_OK message to the end subscriber. Similar to the SETUP messages, the catalog track being sent at 522 and the SUBSCRIBE_OK message being sent at 522 may be performed sequentially as shown or in parallel.

At 526, the relay sends the catalog to the end subscriber.

At 528, the end subscriber sends a SUBSCRIBE message to the relay to subscribe to track 1, and further requesting header extension X1.

If the relay does not already have an active subscription for track 1 with header extension X1, then at 530 the relay sends a SUBSCRIBE request to the original publisher to subscribe to track 1 with header extension X1, and at 532 the relay receives objects for track 1 with header extension X1 from the original publisher. At 534, the relay sends the objects for track 1 with header extension X1 to the end subscriber.

In the example shown in FIG. 5, it is assumed that ANNOUNCE and SUBSCRIBE do not lead to any errors. Therefore, only the scenario with SUBSCRIBE_OK and ANNOUNCE_OK is shown. Otherwise, SUBSCRIBE_ERROR and ANNOUNCE_ERROR can be used by the publisher and subscriber/relay, respectively, to indicate the errors.

In some examples, once the scope of a header extension has been negotiated as track or track namespace and objects with the header extension have been published, a further SUBSCRIBE message may be used to disable header extension(s) for a particular track. For example, the first entity may send, to the second entity, a further request to subscribe to the one or more tracks, where the further request comprises information indicating one or more header extensions requested to be disabled for the one or more tracks. The second entity may then send, to the first entity, one or more further objects for the one or more tracks based on the further request, where the one or more further objects do not comprise the one or more header extensions requested to be disabled.

To illustrate some of the above concepts further, two non-limiting examples are provided below.

### Example 1

Client sends a CLIENT_SETUP message requesting extensions [(X1,X2,X3,X4), SCOPE=session]. This means that client wants to receive (if it is a subscriber) or send (if it is a publisher) the extensions (X1,X2,X3,X4) on a session level (i.e. for all tracks in the session).

The server responds with a SERVER_SETUP message indicating extensions [(X1,X2,X3), SCOPE=session]. This means that the server rejected to send (if it is a publisher) or receive (if it is a subcriber) the extension with the ID=X4 (by removing it from the list of extensions) and accepted the use of the extensions X1-X3 globally, i.e. for every subscribed track in the MOQ session.

### Example 2

Client sends a CLIENT_SETUP message requesting extensions [(X1,X2,X3,X4), SCOPE=session].

Server responds with a SERVER_SETUP message indicating extensions [(X1,X2,X3,X4), SCOPE=track]. This means that the server accepted to send/receive all requested extensions X1-X4.

If the server is a publisher, this means that it will not automatically add them to each subscribed track, since it set SCOPE=track. If the server is a subscriber, this means that it requests the client (publisher) not to automatically add them to each track.

In this case, since the negotiated SCOPE is "track" and not "session", subscribers need to indicate whether they want to receive the extension for that track while subscribing to a track. This is achieved by including a request for the extensions in the SUBSCRIBE message, specifying which extensions, previously negotiated in Setup messages, the subscriber wishes to receive on the subscribed track.

For example, in a scenario with three subscribed tracks (with the track names: video1, video2, audio1), the SUBSCRIBE messages for these tracks could include:
(a) video1, EXTENSION =[X1,X2] - Include only the extensions X1 and X2 for the track "video1"
(b) video2, EXTENSION =[X1,X2,X3]
(c) audio1, EXTENSION =[X4]

In some examples, whether an extension will be added by default to all tracks (scope=session) or need to be indicated in the SUBSCRIBE message (scope=track) can be negotiated.

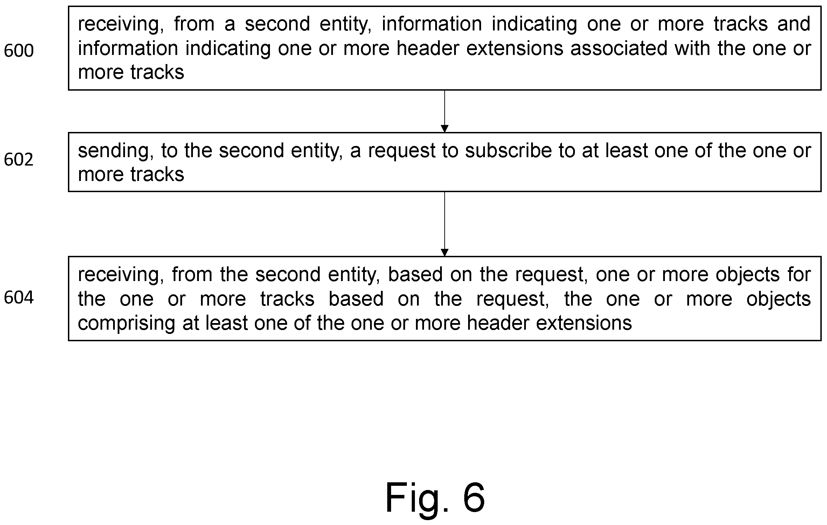

Reference is made to FIG. 6, which shows a method according to some examples. The method shown in FIG. 6 may be performed by a first entity acting as a subscriber, such as an end subscriber (e.g., UE) or a relay acting as a subscriber.

At 600, the method comprises receiving, from a second entity, information indicating one or more tracks and information indicating one or more header extensions associated with the one or more tracks.

At 602, the method comprises sending, to the second entity, a request to subscribe to at least one of the one or more tracks.

At 604, the method comprises receiving, from the second entity, based on the request, one or more objects for the one or more tracks based on the request, the one or more objects comprising at least one of the one or more header extensions.

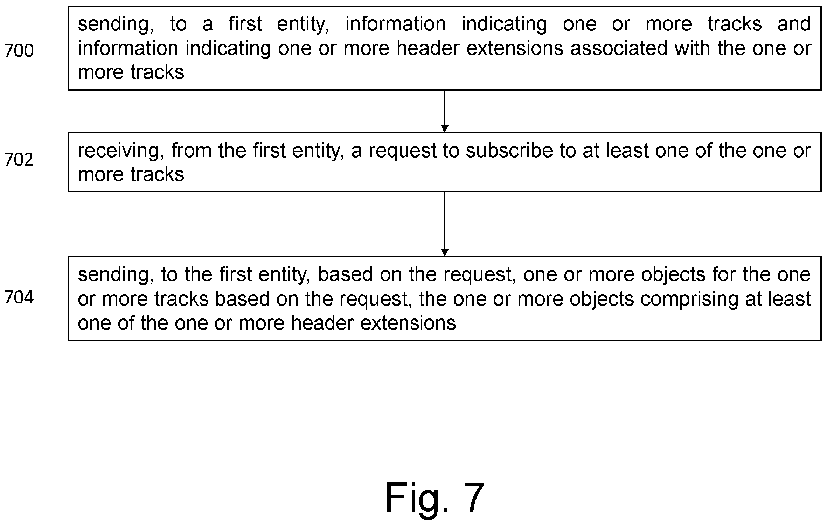

Reference is made to FIG. 7, which shows a method according to some examples. The method shown in FIG. 7 may be performed by a second entity acting as a publisher, such as an original publisher (e.g., an application server) or a relay acting as a publisher.

At 700, the method comprises sending, to a first entity, information indicating one or more tracks and information indicating one or more header extensions associated with the one or more tracks.

At 702, the method comprises receiving, from the first entity, a request to subscribe to at least one of the one or more tracks.

At 704, the method comprises sending, to the first entity, based on the request, one or more objects for the one or more tracks based on the request, the one or more objects comprising at least one of the one or more header extensions.

In some examples, the information indicating the one or more tracks and the information indicating one or more header extensions associated with the one or more tracks may be comprised in a catalog of tracks. Thus, the catalog may advertise which tracks are available for publication by an original publisher and which header extensions are available for those tracks.

For instance, the following is an example catalog where two tracks are advertised - "video" which has header extensions X1 and X2 available, and "audio" which has header extension X1 available:

```
 {
 "version": 1,
 "tracks": [
  {
   "name": "video",
   "namespace": "conference.example.com/conference123/alice",
   "packaging": "loc",
   "renderGroup": 1,
   "codec":"av01.0.08M.10.0.110.09",
   "width":1920,
   "height": 1080,
   "framerate":30,
   "bitrate": 1500000,
   "extensions": [X1,X2]
  },
  {
   "name": "audio",
   "namespace": "conference.example.com/conference123/alice",
   "packaging": "loc",
   "renderGroup": 1,
   "codec": "opus",
   "samplerate":48000,
   "channelConfig":"2",
   "bitrate":32000
   "extensions": [X1]
  }
 ]
 }
```

In some examples, when a subscriber subscribes to a track, the publisher may send the track objects with the extension headers indicated in the catalog for that track. No negotiation via SETUP messages or inclusion of an additional parameter in SUBSCRIBE may be required. In other examples, required/supported extensions may be negotiated using SETUP messages as described previously. Based on negotiated extensions, the publisher may publish the track with the extensions listed in the catalog for the subscribed track.

For instance, the first entity may send, to the second entity, a first message (e.g., CLIENT_SETUP) comprising information indicating one or more header extensions that are supported by the first entity. The second entity may send, to the first entity, a second message (e.g., SERVER_SETUP) comprising information indicating one or more header extensions that are supported by the second entity. The information indicating the one or more header extensions associated with the one or more tracks may be based on the one or more header extensions being supported by the first entity and the second entity.

In some examples, the subscriber may indicate, in the SUBSCRIBE message, one or more requested header extensions for the one or more tracks. The one or more requested header extensions may be based on the first scope and second scope negotiated/indicated in the SETUP messages, if such information is included.

In some examples, the SUBSCRIBE message may indicate one or more requested header extensions, but not necessarily all available header extensions as advertised in the catalog. For instance, if track 1 is advertised along with header extensions [X1, X2, X3] in the catalog, the subscriber may send a SUBSCRIBE message requesting header extensions X1 and X3 but not X2. The publisher may then publish the objects for track 1 including header extensions X1 and X3.

In some examples, the catalog of tracks may comprise multiple variants or versions of the same track with different header extension(s) available. For instance, the catalog of tracks may indicate track 1 with no header extensions ("track 1"), and a variant of track 1 with header extensions [X1, X2, X3] available ("track 1 - extensions"). If the subscriber wants to subscribe to track 1 but does not want the header extensions, the subscriber may issue a SUBSCRIBE message to request to subscribe to "track 1". Likewise, if the subscriber wants to subscribe to track 1 with any of the header extensions listed in the catalog, the subscriber may issue a SUBSCRIBE message to request to subscribe to "track 1 - extensions", optionally indicating which of the header extensions are requested by the subscriber.

That is to say, in some examples, the information indicating one or more tracks and information indicating one or more header extensions associated with the one or more tracks comprises information indicating a first version of a first track, the first version not being associated with the one or more header extensions; and information indicating a second version of the first track, the second version being associated with the one or more header extensions.

In some examples, if the SUBSCRIBE message requests one or more header extensions that are not listed in the catalog, the publisher may close the MOQ session due to a violation of protocol or ignore the requested, unoffered header extension(s) and publish the one or more tracks as offered in the catalog.

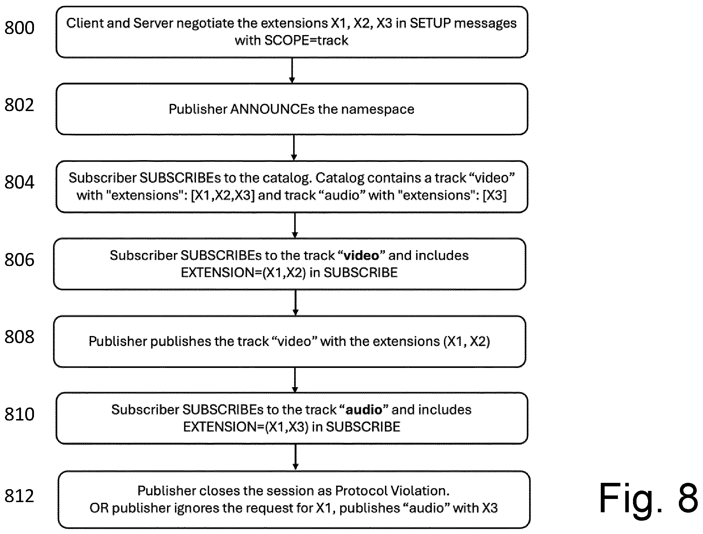

Reference is made to FIG. 8, which shows a method of an example using the "video" and "audio" tracks described previously.

At 800, the client and server negotiate the use of header extensions X1, X2 and X3 in SETUP messages with scope=track, for example as described previously.

At 802, the publisher ANNOUNCEs the track namespace.

At 804, the subscriber sends a SUBSCRIBE message to subscribe to the catalog, and the publisher publishes the catalog to the subscriber. The catalog indicates a track "video" with header extensions [X1, X2, X3] and a track "audio" with header extension [X3].

At 806, the subscriber sends a SUBSCRIBE message to the publisher to subscribe to the track "video" and requests header extensions X1 and X2.

At 808, the publisher publishes the track "video" and sends objects for that track including the header extensions X1 and X2 to the subscriber.

At 810, the subscriber sends a SUBSCRIBE message to the publisher to subscribe to the track "audio" and requests header extensions X1 and X3.

At 812, the publisher either closes the session due to a protocol violation (as X3 is not offered for the track "audio") or publishes the track "audio" and sends objects for that track including the header extension X1 (but not X3) to the subscriber.

As mentioned previously, in some implementations, one or more relays may be provided between an original publisher and end subscriber in a MOQ session. In some examples, a relay may be provided at or by a UPF in a communications network. This may be referred to herein as a UPF/relay. The UPF/relay may become aware of which header extensions, including MRI described previously, are supported for a track subscribed to by an end subscriber (e.g., a UE). The UPF/relay may request certain header extensions from a publisher based on information received from other network entities, such as the SMF. Similarly, the UPF/relay may report to other network entities (e.g., the SMF) what extensions are available from a particular publisher, track namespace or individual track, which the other network entity can use to configure the track specific traffic handling in the communications network.

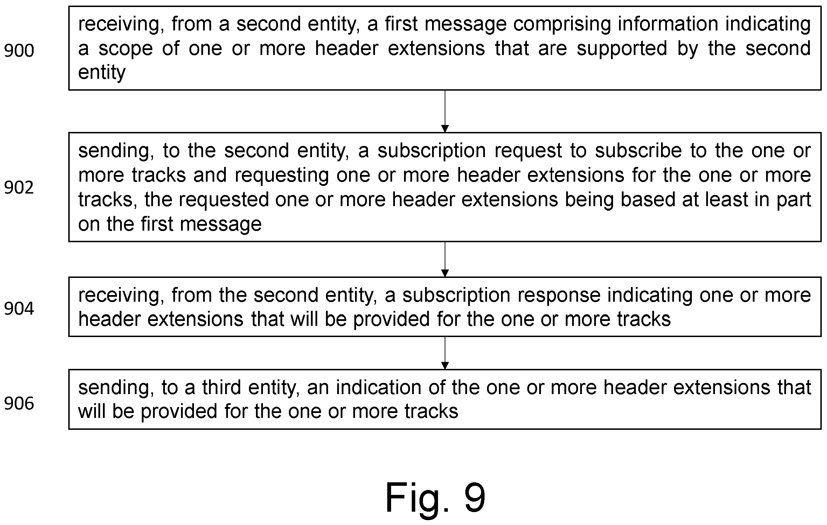

Reference is made to FIG. 9, which shows a method according to some examples. The method shown in FIG. 9 may be performed by a first entity acting as a relay in a MOQ session. The first entity may, in some examples, be configured to implement, comprise, or be comprised in a UPF with an integrated MOQ relay (i.e. a UPF/relay as referred to herein).

At 900, the method comprises receiving, from a second entity, a first message comprising information indicating a scope of one or more header extensions that are supported by the second entity. The second entity may be a publisher in a MOQ session, for example an application server.

At 902, the method comprises sending, to the second entity, a subscription request to subscribe to the one or more tracks and requesting one or more header extensions for the one or more tracks, the requested one or more header extensions being based at least in part on the first message.

At 904, the method comprises receiving, from the second entity, a subscription response indicating one or more header extensions that will be provided for the one or more tracks.

At 906, the method comprises sending, to a third entity, an indication of the one or more header extensions that will be provided for the one or more tracks. The third entity may be configured to implement, comprise, or be comprised in a network function, such as a SMF.

As mentioned previously, the one or more header extensions may comprise Media Related Information (MRI). Examples include, but are not limited to, PDU Set Information, End of Data Burst, Time to Next Burst, Data Burst Size or Expedited Data Transfer.

In some examples, the UPF/relay may exchange the CLIENT_SETUP and SERVER_SETUP messages as described previously with the publisher (e.g., application server) and the UE. The UPF/relay may, in the CLIENT_SETUP and SERVER_SETUP negotiation with the publisher, indicate the MRI as required header extensions with scope=session. If a publisher indicates support for certain header extensions with scope=session the UPF knows those MRI extensions will always be available for any tracks subscribed by a Subscriber from that publisher. On the other hand, if a publisher indicates no support for a specific MRI extension, the UPF knows that MRI extension will never be available from that publisher. If a publisher indicates a header extension to be available with scope=track, the UPF/relay can include that header extension in its SUBCRIBE message for a specific track and can learn in SUBSCRIBE_OK from the publisher if that header extension is available for that track during the subscription time.

In some examples, the UPF/relay may indicate, to the SMF, which header extensions are available so that the SMF becomes aware which MRI related extensions are available from a publisher or track namespace or track. This may allow, enable, and/or facilitate the SMF to decide whether to activate specific handling in RAN. The details of what the SMF may do are not in scope of this disclosure.

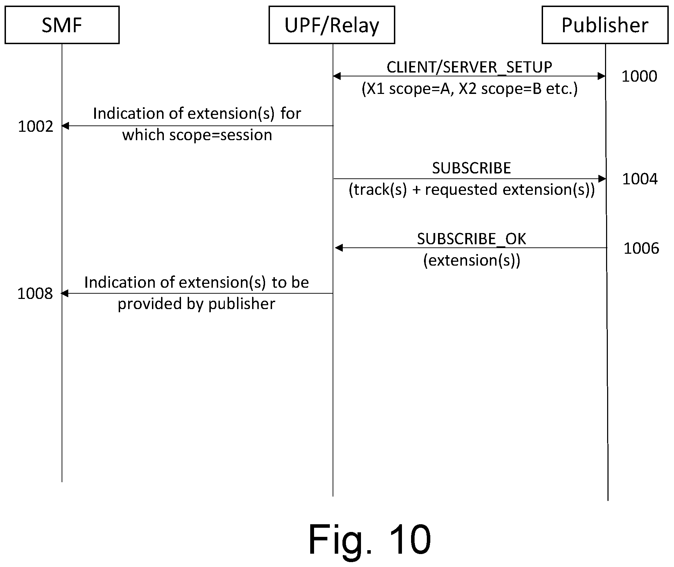

Reference is made to FIG. 10, which shows a method according to some examples.

At 1000, the UPF/relay and publisher (e.g., an application server) exchange CLIENT_SETUP and SERVER_SETUP messages to negotiate header extensions (e.g., header extensions with scope=session, scope=track or scope=track namespace), as described previously.

At 1002, the UPF/relay sends, to a SMF, information indicating one or more header extensions that are supported by the publisher with scope=session.

At 1004, the UPF/relay sends, to the publisher, a SUBSCRIBE message to subscribe to one or more tracks. The SUBSCRIBE message may comprise information requesting one or more header extensions at the scope=track or scope=track namespace level, as described previously.

At 1006, the publisher sends, to the UPF/relay, a SUBSCRIBE_OK message based on the SUBSCRIBE message. The SUBSCRIBE_OK message indicates which of the requested header extensions are to be provided for the one or more tracks.

At 1008 the UPF/relay sends, to a SMF, information indicating one or more header extensions that will be provided by the publisher for the one or more tracks.

In some examples, the UPF/relay may receive from SMF, an indication of which header extensions (e.g., MRI) are required for a specific track, and optionally traffic flow identification and QoS handling requirements for that track. A particular track may be identified by one or more of a track name, a track namespace, a subscription identifier, a sender identifier, a receiver identifier, or a track alias (e.g., in a Packet Detection Rule). Based on the required header extension(s), the UPF/relay may request specific extensions in its SUBSCRIBE message to a publisher in case they had not been already agreed in CLIENT_SETUP and SERVER_SETUP. If, based on its negotiation with the publisher, the UPF/relay becomes aware that some required header extension(s) requested by the SMF is not available for the track, the UPF/relay may report this as an error to back to SMF.

For instance, if SMF is requesting UPF to perform PDU Set marking for the IP PDUs carrying track related Objects to RAN but PDU Set information extension is not available for that track, the UPF/relay informs this to SMF.

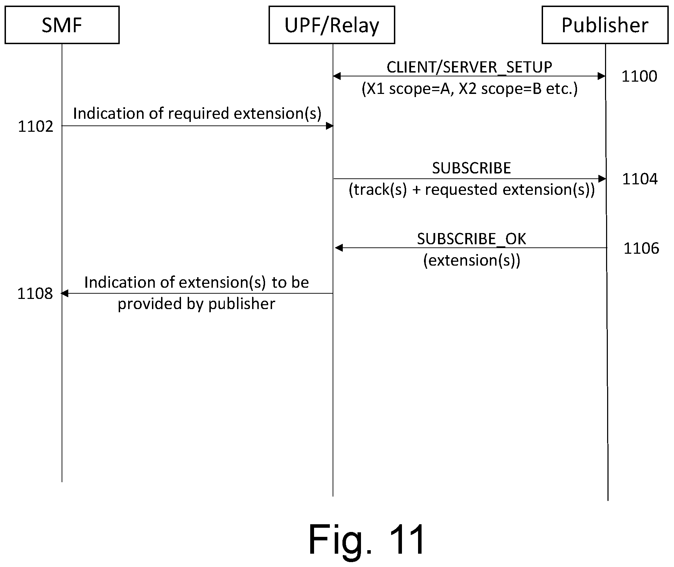

Reference is made to FIG. 11, which shows a method according to some examples.

At 1100, the UPF/relay and publisher (e.g., an application server) exchange CLIENT_SETUP and SERVER_SETUP messages to negotiate header extensions (e.g., header extensions with scope=session, scope=track or scope=track namespace), as described previously.

At 1102, the SMF sends, to the UPF/relay, information indicating one or more required header extensions for one or more tracks, and optionally additional information such as QoS requirements and packet handling rules for the one or more tracks.

At 1104, the UPF/relay sends, to the publisher, a SUBSCRIBE message to subscribe to the one or more tracks. The SUBSCRIBE message may comprise information requesting one or more header extensions at the scope=track or scope=track namespace level, as described previously. The one or more requested header extensions may comprise the one or more required header extensions for the one or more tracks.

At 1106, the publisher sends, to the UPF/relay, a SUBSCRIBE_OK message based on the SUBSCRIBE message. The SUBSCRIBE_OK message indicates which of the requested header extensions are to be provided for the one or more tracks.

At 1108 the UPF/relay sends, to a SMF, information indicating one or more header extensions that will be provided by the publisher for the one or more tracks.

In some examples, the UPF/relay determine which header extensions are available from a publisher based on the SUBSCRIBE message(s) received from the UE by inferring the availability of those header in the Catalog. That is to say, the UPF/relay may determine that a UE (as end subscriber), by requesting a particular header extension for a track, is aware that the particular header extension is available for that track. Thus, the UPF/relay may determine, at the subscription time, which header extensions will be included by a publisher for a specific track and can act accordingly.

In some examples, a UPF/relay may indicate, to an End Subscriber (e.g., a UE) one or more header extensions preferred by the UPF/relay. For example, the UPF/relay may indicate in the session setup (CLIENT_SETUP and SERVER_SETUP) messages, one or more header extensions preferred by the UPF/relay. The one or more header extensions preferred by the UPF/relay may be provided in a prioritized list to indicate which header extensions are higher priority.

For instance, the UPF/relay may send a message (e.g., CLIENT_SETUP) to the subscriber comprising information indicating: TRACK_EXTENSION_RELAY_PREFERENCE: [priority:1, EXTENSION: [1,2], priority:2, EXTENSION:[3]], to indicate that the UPF/relay prefers header extensions 1 and 2 with priority 1 and header extension 3 with priority 2.

An End Subscriber that supports the one or more preferred header extensions may use the prioritized list to choose a track alternative with extensions best matching the list. That is to say, the end subscriber may prefer tracks with a highest number of highest priority header extensions within the alternatives. If multiple alternatives have the same amount of highest priority extensions, the preference may be based on the number of second priority extensions and so on. Thus the UPF/relay may influence which of the track alternatives is chosen even though the final decision is made by the End Subscriber.

The UE may also indicate, to the UPF/relay, which header extension(s) are to be included in the subscribed track.

As an example, the UPF/relay may indicate to a UE End Subscriber in CLIENT_SETUP and SERVER_SETUP exchange that the UPF/relay prefers track alternatives in the Catalog that support header extensions X1, X2, X3. Based on this the UE End Subscriber prefers track alternative in the Catalog with header extensions X1, X2 over another alternative with only X1. When sending SUBSCRIBE, the UE indicates in a header to the UPF/relay that the track being subscribed to will include header extensions X1, X2. This allows the UPF/relay to know it can expect header extensions X1, X2 and act accordingly.

In some examples, the UPF/relay may not pass any downstream header extension requests received from its subscriber to its upstream publisher. If header extensions are included in objects received from the upstream publisher, they may be forwarded on to the subscriber.

In some examples, the UPF/relay may aggregate one or more downstream header extension requests in an upstream SUBSCRIBE message to a publisher. For instance, the UPF/relay may receive a request for header extension X1 from UE1, and a request for header extensions X2 and X3 from UE2, and send a single SUBSCRIBE request to request header extensions X1, X2, X3. In some examples, when the UPF/relay then receives a request for a further header extension that the UPF/relay is not yet subscribed to, the UPF/relay may send a SUBSCRIBE_UPDATE message to the publisher subscribe to the further header extension. In other examples, the relay/UPF may send separate upstream SUBSCRIBE requests for each SUBSCRIBE request received by the UPF/relay for the same track with different requested header extensions.

In some examples, the UPF/relay may receive objects comprising one or more header extensions from a publisher, and remove at least one of the one or more header extensions before sending the objects to the downstream subscribers. For instance, when objects comprising header extensions X1, X2 and X3 are received at the UPF/relay for UE1 and UE2 as described above, the UPF/relay may remove header extension X1 from objects sent to UE2 and may remove header extensions X2 and X3 from objects sent to UE1. In other examples, the UPF/relay may send the objects comprising all the header extensions to each downstream subscriber, and the downstream subscriber can ignore any of the header extension(s) received in the objects that were not requested by the downstream subscriber.

In some examples, one or more header extensions may be used by the UPF/relay but not by the end subscriber. In some examples, the UPF/relay may add a request for one or more header extensions in its SUBSCRIBE to upstream (publishers), even if no downstream Subscriber is asking for them. The UPF/relay may also remove at least one of the one of more header extensions (e.g., header extension(s) only consumed by the UPF/relay) from objects that the UPF/relay is forwarding downstream. For instance, header extensions carrying Media Related Information may only be used by the UPF/relay, and so the UPF/relay may include a request for the MRI in the SUBSCRIBE message it sends upstream and can remove the header extensions for the MRI from the Objects the UPF/relay forwards downstream after reading and processing them.

Examples have been described whereby a publisher and subscriber may determine which header extensions are available for which tracks, and subscribe to those tracks and header extensions. The examples may facilitate or allow header extensions to be provided with different scope and allow, enable, and/or facilitate subscription accordingly. Some examples may facilitate incorporation of a MOQ relay within a communications network by providing a UPF/relay that may report the availability of header extensions to the network (e.g., SMF) and which may influence which header extensions are provided by a publisher to facilitate the functioning of MOQ sessions within the communications network.

In some examples, there is provided a first entity comprising: means for sending, to a second entity, a first message comprising information indicating a first scope of one or more first header extensions that are supported by the first entity; means for receiving, from the second entity, a second message comprising information indicating a second scope of one or more second header extensions that are supported by the second entity; means for sending, to the second entity, a request to subscribe to one or more tracks; and means for receiving, from the second entity, one or more objects for the one or more tracks based on the request, wherein the one or more objects comprise at least one of the one or more first header extensions or the one or more second header extensions based on the first scope and the second scope.

In some examples, there is provided a first entity comprising at least one processor and at least one memory storing instructions that, when executed by the at least one processor, cause the first entity to at least: send, to a second entity, a first message comprising information indicating a first scope of one or more first header extensions that are supported by the first entity; receive, from the second entity, a second message comprising information indicating a second scope of one or more second header extensions that are supported by the second entity; send, to the second entity, a request to subscribe to one or more tracks; and receive, from the second entity, one or more objects for the one or more tracks based on the request, wherein the one or more objects comprising at least one of the one or more first header extensions or the one or more second header extensions based on the first scope and the second scope.

In some examples, there is provided a second entity comprising: means for receiving, from a first entity, a first message comprising information indicating a first scope of one or more first header extensions that are supported by the first entity; means for sending, to the first entity, a second message comprising information indicating a second scope of one or more second header extensions that are supported by the second entity; means for receiving, from the first entity, a request to subscribe to one or more tracks; and means for sending, to the first entity, one or more objects for the one or more tracks based on the request, wherein the one or more objects comprise at least one of the one or more first header extensions or the one or more second header extensions based on the first scope and the second scope.

In some examples, there is provided a second entity comprising at least one processor and at least one memory storing instructions that, when executed by the at least one processor, cause the second entity to at least: receive, from a first entity, a first message comprising information indicating a first scope of one or more first header extensions that are supported by the first entity; send, to the first entity, a second message comprising information indicating a second scope of one or more second header extensions that are supported by the second entity; receive, from the first entity, a request to subscribe to one or more tracks; and send, to the first entity, one or more objects for the one or more tracks based on the request, wherein the one or more objects comprise at least one of the one or more first header extensions or the one or more second header extensions based on the first scope and the second scope.

In some examples, there is provided a first entity comprising: means for receiving, from a second entity, information indicating one or more tracks and information indicating one or more header extensions associated with the one or more tracks; means for sending, to the second entity, a request to subscribe to at least one of the one or more tracks; and means for receiving, from the second entity, one or more objects for the one or more tracks based on the request, the one or more objects comprising at least one of the one or more header extensions.

In some examples, there is provided a first entity comprising at least one processor and at least one memory storing instructions that, when executed by the at least one processor, cause the first entity to at least: receive, from a second entity, information indicating one or more tracks and information indicating one or more header extensions associated with the one or more tracks; send, to the second entity, a request to subscribe to at least one of the one or more tracks; and receive, from the second entity, one or more objects for the one or more tracks based on the request, the one or more objects comprising at least one of the one or more header extensions

In some examples, there is provided a second entity comprising: means for sending, to a first entity, information indicating one or more tracks and information indicating one or more header extensions associated with the one or more tracks; means for receiving, from the first entity, a request to subscribe to at least one of the one or more tracks; and means for sending, to the first entity, one or more objects for the one or more tracks based on the request, the one or more objects comprising at least one of the one or more header extensions.

In some examples, there is provided a second entity comprising at least one processor and at least one memory storing instructions that, when executed by the at least one processor, cause the second entity to at least: send, to a first entity, information indicating one or more tracks and information indicating one or more header extensions associated with the one or more tracks; receive, from the first entity, a request to subscribe to at least one of the one or more tracks; and send, to the first entity, one or more objects for the one or more tracks based on the request, the one or more objects comprising at least one of the one or more header extensions.

In some examples, there is provided an apparatus for a first entity, the apparatus comprising: means for receiving, from a second entity, a first message comprising information indicating a scope of one or more header extensions that are supported by the second entity; means for sending, to the second entity, a subscription request to subscribe to one or more tracks and requesting one or more header extensions for the one or more tracks, the requested one or more header extensions being based at least in part on the first message; means for receiving, from the second entity, a subscription response indicating one or more header extensions that will be provided for the one or more tracks; and means for sending, to a third entity, an indication of the one or more header extensions that will be provided for the one or more tracks.

In some examples, there is provided an apparatus for a first entity, the apparatus comprising at least one processor and at least one memory storing instructions that, when executed by the at least one processor, cause the first entity to at least: receive, from a second entity, a first message comprising information indicating a scope of one or more header extensions that are supported by the second entity send, to the second entity, a subscription request to subscribe to one or more tracks and requesting one or more header extensions for the one or more tracks, the requested one or more header extensions being based at least in part on the first message; receive, from the second entity, a subscription response indicating one or more header extensions that will be provided for the one or more tracks; and send, to a third entity, an indication of the one or more header extensions that will be provided for the one or more tracks.

While some of the examples disclosed herein have been described with reference to MOQT, it should be understood that other examples of this disclosure need not be limited to MOQT, and may apply to any communication system operating using publish and subscribe based communication.

While reference may be made to "an", "one", or "some" example(s) throughout this disclosure, this does not necessarily mean that each reference is made to the same example(s), or that a particular feature only applies to a single example. Single features of different examples may also be combined to provide other examples. Further, when a particular feature, structure, or characteristic is described in connection of an example, it is within the knowledge of one skilled in the art to apply such feature, structure, or characteristic in connection with other examples whether or not explicitly described.

It shall be understood that although the terms "first," "second" and the like may be used herein to describe various elements, these elements should not be limited by these terms. These terms are only used to distinguish one element from another.

It is understood that references in the above to various network functions (e.g., to an AMF, an SMF, etc.) may be implemented by apparatus that perform at least some of the functionality associated with those network functions. Further, an apparatus configured to implement a network function may further be configured to implement a virtual network function instance of that network function. The apparatus may be a virtual machine provided by the infrastructure (e.g., a hypervisor, processors, and/or memories) of a cloud computing system. The apparatus may be part of a distributed computing system having a plurality of computing devices (e.g., servers) in communication with each other over a data network. Any portion of or all operations of network function may be performed by the same apparatus or different apparatuses, such one or more computing devices of the distributed computing system.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some examples have been described in relation to 5G networks, similar examples can be applied in relation to other networks and communication systems. Therefore, although certain examples were described above, by way of non-limiting and illustrative example, with reference to certain example architectures for wireless networks, technologies and standards, further examples may be applied to any other suitable forms of communication systems than those illustrated and described herein.

It is also noted herein that there are several variations and modifications which may be made to the various examples described herein without departing from the scope of this disclosure.

As used herein, the phrases "at least one of A or B", "at least one of A and B", and "A and/or B" means (A), (B), or (A and B). For the purposes of this disclosure, the phrase "A, B, and/or C" means (A), (B), (C), (A and B), (A and C), (B and C), or (A, B, and C).

As used herein, the term "or" refers to a non-exclusive "or" unless otherwise indicated (e.g., use of "or else" or "or in the alternative").

As used herein, unless stated explicitly, performing a step "in response to A" does not indicate that the step is performed immediately after "A" occurs and one or more intervening steps may be included. Analogously, performing a step or functionality "based on A" does not indicate that the step or functionality is performed solely based on "A" as one or more additional conditions may be included.

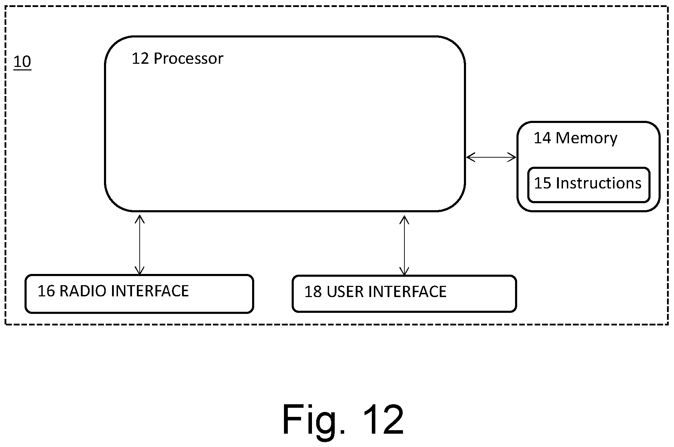

FIG. 12 shows, by way of example, a block diagram of an apparatus 10. The apparatus 10 comprises, for example, at least one processor 12 and at least one memory 14 storing instructions 15 that, when executed by the at least one processor, may cause the apparatus 10 at least to perform the method or methods (or respective portion(s) thereof) as disclosed herein. In some example, the at least one memory and the instructions (e.g., computer program code, software), are configured, with the at least one processor, to cause the apparatus 10 to perform the method or methods (or respective portion(s) thereof) as disclosed herein. In some examples, the instructions are of an entity (e.g., a first entity, such as a UE, a second entity, such as a server, or a third entity, such as a network function) described herein.

A processor 12 may comprise circuitry, or be constituted as circuitry or circuitries, the circuitry or circuitries being configured to perform phases of methods in accordance with examples described herein.

As used herein, the term "circuitry" may refer to one or more or all of the following: (a) hardware-only circuit implementations (such as implementations in analog, digital and/or quantum circuitry), and (b) combinations of hardware circuit(s) and software, such as (as applicable): (i) a combination of analog, digital and/or quantum hardware circuit(s) with software/firmware and (ii) any or all portions of hardware processor(s) (including digital and/or quantum processor(s)) with software, and memory(ies) that work together to cause an apparatus, such as a mobile device, user equipment, computing device, or server, to perform various functions) and (c) any or all portions of hardware circuit(s), such as a microprocessor(s), processor(s) and/or quantum processor(s), that requires software (e.g., firmware) for operation, but the software may not be present when it is not needed for operation.

This definition of circuitry applies to all uses of this term in this disclosure, including in any claims. As a further example, as used in this disclosure, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The memory 14 may be implemented using any suitable data storage technology. The memory may comprise a database for storing data. The memory 14 may be at least in part external to apparatus 10 but accessible to apparatus 10.

The instructions 15 may be comprised in a computer readable medium or a non-transitory computer readable medium. A term "non-transitory," as used herein, is a limitation of the medium itself (i.e. tangible, not a signal) as opposed to a limitation on data storage persistency (e.g., random access memory, RAM, vs. read only memory, ROM).

For example, the apparatus 10 may be implemented as a terminal device, such as the UE described previously. As another example, the apparatus may be comprised in such a terminal device, e.g., as a chipset configured to control the terminal device. The apparatus 10 may be caused or configured to perform at least the method of any one or more of the examples (or portion(s) thereof) described herein.

As another example, the apparatus 10 may be implemented as a network node, e.g., the network node described previously. In another example, the apparatus may be comprised in such a network node, e.g., as a chipset configured to control the network node. The apparatus 10 may be caused or configured to perform at least the method of any one or more of the examples (or portion(s) thereof) described herein.

The apparatus may comprise one or more entities of any of protocol layers, such as a MAC entity, an RRC entity, an RLC entity, a PDCP entity or a PHY entity. In some examples, the entity may be configured to perform at least the method of and/or any one or more of the examples described.

The apparatus 10 may comprise a radio interface 16. The radio interface 16 may provide the apparatus 10 with communication capabilities. The radio interface 16 may comprise a receiver configured to receive information in accordance with at least one cellular or non-cellular standard. The radio interface 16 may comprise a transmitter configured to transmit information in accordance with at least one cellular or non-cellular standard. The receiver may comprise more than one receiver. The transmitter may comprise more than one transmitter. The radio interface 16 may comprise a transceiver configured to receive and transmit information in accordance with at least one cellular or non-cellular standard. The transceiver may comprise more than one transceiver.

The apparatus 10 may comprise an interface (e.g.,a user interface) 18 comprising, for example, at least one of a keypad, a microphone, a touch display, a display, a speaker, etc. The interface 18 may be used to control the apparatus (e.g., by the user). The interface 18 may be external to the apparatus 10. For example, the apparatus 10 may be connected to another device, such as a computer, either via wireless or wired connection, and the apparatus 10 is controlled via the computer (e.g., by a user).

In some examples, at least some of the processes described herein may be carried out by an apparatus comprising means for carrying out at least some of the described processes. Means for performing method steps as disclosed herein may include software and/or hardware components of the apparatus 10. For example, the at least one processor 12, the memory 14, and the computer program code form means for carrying out the method or methods as disclosed herein, and any of the examples. As used herein the term "means" is to be construed in singular form, i.e. referring to a single element, or in plural form, i.e. referring to a combination of single elements. Therefore, terminology "means for [performing A, B, C]", is to be interpreted to cover an apparatus in which there is only one means for performing A, B and C, or where there are separate means for performing A, B and C, or partially or fully overlapping means for performing A, B, C. Further, terminology "means for performing A, means for performing B, means for performing C" is to be interpreted to cover an apparatus in which there is only one means for performing A, B and C, or where there are separate means for performing A, B and C, or partially or fully overlapping means for performing A, B, C.

The scope of protection sought for various examples of this disclosure is set out by the independent claims. The examples and features thereof, if any, described in this disclosure that do not fall under the scope of the independent claims are to be interpreted as examples useful for understanding various examples of this disclosure.

Even though various examples have been described above with reference to the drawings, it is clear that these examples are not restricted thereto - but can be modified in many different ways. Therefore, all words and expressions should be interpreted broadly and they are intended to illustrate, not to restrict, these examples. As technology advances, it will become apparent to a person skilled in the art as to how certain examples can be further implemented and/or modified in various ways. Further, it is clear to a person skilled in the art that the examples (or portion(s) thereof) described herein may, but are not required to, be combined in various ways with any other examples (or portion(s) thereof) described herein.

## Claims

1. A method for a first entity, the method comprising:
receiving, from a second entity, a first message comprising information indicating a scope of one or more header extensions that are supported by the second entity;
sending, to the second entity, a subscription request to subscribe to one or more tracks and requesting one or more header extensions for the one or more tracks, the requested one or more header extensions being based at least in part on the first message;
receiving, from the second entity, a subscription response indicating one or more header extensions that will be provided for the one or more tracks; and
sending, to a third entity, an indication of the one or more header extensions that will be provided for the one or more tracks.

2. The method of claim 1, wherein the one or more header extensions comprise Media Related Information.

3. The method of claim 1 or 2, wherein the first entity comprises a user plane function with an integrated media over QUIC relay, the second entity comprises a publisher, and the third entity comprises a session management function.

4. The method of any preceding claim, further comprising:
receiving, from a fourth entity, a subscription request for the one or more tracks,
wherein the subscription request sent to the second entity is based on the subscription request received from the fourth entity.

5. The method of claim 4, wherein the fourth entity is a user equipment.

6. The method of claim 4 or 5, wherein the subscription request received from the fourth entity comprises information indicating one or more header extensions requested by the fourth entity.

7. The method of claim 6, further comprising:
sending, to the fourth entity, information indicating one or more header extensions preferred by the first entity,
wherein the one or more header extensions requested by the fourth entity are based on the one or more header extensions preferred by the first entity.

8. The method of claim 7, further comprising:
receiving, from the third entity, information indicating at least one of: one or more required header extensions for the one or more tracks, traffic information associated with the one or more tracks; or one or more quality of service rules associated with the one or more tracks,
wherein the one or more header extensions preferred by the first entity are based on the indicated at least one of: the one or more required header extensions, the traffic information associated with the one or more tracks; or the one or more quality of service rules associated with the one or more tracks.

9. The method of claim 8, wherein each track is identified by at least one of: a track namespace, a track name, a subscription identifier, a sender identifier, a receiver identifier, or a track alias.

10. The method of claim 8 or 9, further comprising:
determining that the one or more required header extensions are unavailable for the one or more tracks; and
sending, to the third entity, a message indicating that the one or more required header extensions are not available.

11. The method of any one of claims 4 to 10, further comprising:
receiving, from the second entity, one or more objects for the one or more tracks based on the subscription request, the one or more objects comprising at least one of the one or more header extensions; and
sending, to the fourth entity, the one or more objects for the one or more tracks, the one or more objects comprising the at least one of the one or more header extensions.

12. The method of any preceding claim, wherein the one or more tracks comprise one or more media over QUIC tracks.

13. The method of any preceding claim, wherein the first message comprises a CLIENT_SETUP message or a SERVER_SETUP message.

14. An apparatus comprising means for performing the method of any of claims 1 to 13.

15. A computer program comprising instructions, which, when executed by an apparatus cause the apparatus at least to perform the method of any of claims 1 to 13.
